# EUROPEAN PATENT APPLICATION

(11) **EP 4 576 493 A1**
(43) Date of publication of application: **25.06.2025**
(21) Application number: 24221143.1
(22) Date of filing: 18.12.2024
(51) Int. Cl.: H02J 7/00, H02J 7/34, B60L 53/62

(54) **CHARGING PILE**

(30) Priority: 18.12.2023 CN 202311754894
(71) Applicant: Huawei Digital Power Technologies Co., Ltd., Shenzhen, Guangdong 518043 (CN)
(72) Inventor: Yang, Jin, Shenzhen, 518043 (CN); Zhou, Renyou, Shenzhen, 518043 (CN); Wu, Xinye, Shenzhen, 518043 (CN); Li, Fei, Shenzhen, 518043 (CN)
(74) Representative: Gill Jennings & Every LLP

(57) **Abstract**

Embodiments of this application provide a charging pile. The charging pile includes a precharge circuit and at least one power conversion apparatus. An output end of the precharge circuit is connected to a bus capacitor in each power conversion apparatus. Each power conversion apparatus is configured to provide electric energy for a charging connector. When each power conversion apparatus is in an off state and maximum power-off duration is greater than first preset duration, the precharge circuit is configured to output a recovery voltage, so that each bus capacitor is powered on. Power-off duration is an interval between last power-off time and current power-on time of the bus capacitor. The maximum power-off duration is maximum duration in power-off duration of each bus capacitor. The recovery voltage is less than a rated voltage of any bus capacitor. In this solution, the off state of the power conversion apparatus and power-off duration of an electrolytic capacitor are determined, and the precharge circuit outputs the recovery voltage to the bus capacitor in each power conversion apparatus, to perform unified power-on repairing on each bus capacitor. The repair process is moderate, and there is no risk of a bias voltage or capacitor damage due to overvoltage.

## Description

### TECHNICAL FIELD

This application relates to the field of charging technologies, and in particular, to a charging pile.

### BACKGROUND

An electrolytic capacitor is an electronic component used to store electricity and electric energy, and is usually used in a charging module of a charging pile. In the electrolytic capacitor, an anode is a metal foil, a electrolyte is an oxide film like aluminum oxide AL₂O₃, which is tightly attached to the anode, and a cathode is made of a conductive material, an electrolyte, and another material.

If the electrolytic capacitor is not powered on for a long time, aluminum ions may undergo a hydration reaction with water, and AL₂(OH)₃ is produced, corroding an AL₂O₃ oxide film medium. If an operating voltage is applied to the electrolytic capacitor in this case, the electrolytic capacitor may fail due to overvoltage, or a leakage current of the electrolytic capacitor increases. Consequently, the electrolytic capacitor internally heats up, or even the insulation layer is burnt. As a result, an action of an explosion-proof valve of the electrolytic capacitor fails.

Therefore, how to repair the electrolytic capacitor in time is a technical problem that needs to be urgently resolved currently.

### SUMMARY

Embodiments of this application provide a charging pile that is configured to resolve a problem in which performance deteriorates when an electrolytic capacitor is not powered on for a long time.

According to a first aspect, this application provides a charging pile. The charging pile includes a precharge circuit and at least one power conversion apparatus. An output end of the precharge circuit is connected to a bus capacitor in each power conversion apparatus. Each power conversion apparatus is configured to provide electric energy for a charging connector. When each power conversion apparatus is in an off state and maximum power-off duration is greater than first preset duration, the precharge circuit is configured to output a recovery voltage, so that each bus capacitor is powered on. Power-off duration is an interval between last power-off time and current power-on time of the bus capacitor. The maximum power-off duration is maximum duration in power-off duration of each bus capacitor. The recovery voltage is less than a rated voltage of any bus capacitor.

It should be noted that, if the bus capacitor in the charging pile is powered off for a long time, aluminum ions in an electrolyte may undergo a hydration reaction with water, corroding an oxide layer of the bus capacitor. Therefore, the bus capacitor needs to be powered on in a timely manner. In this way, the bus capacitor is not powered off for a long time. In addition, the aluminum ions may combine with oxygen ions to re-produce AL₂O₃ under an action of an electric field, thereby repairing the capacitor.

The charging pile provided in this application determines, by determining the maximum power-off duration, whether the bus capacitor needs to be repaired, and ensures that the charging pile is unloaded by determining that each power conversion apparatus is in the off state, thereby avoiding affecting a load connected to the charging pile in a process of applying the electric field to repair the bus capacitor.

In addition, in this application, low-voltage repair is performed by using a precharge circuit. In this way, a chemical reaction can moderately and fully occur. In addition, a problem of a bias voltage in the capacitor or a bus capacitor failure due to overvoltage can be avoided.

In a possible design, precharge duration corresponding to the recovery voltage includes at least two precharge time periods. In two adjacent precharge time periods, a reference voltage corresponding to an earlier precharge time period is less than a reference voltage corresponding to a later precharge time period.

Based on the technical solution of this design, the bus capacitor may be repaired by time period and by voltage, which improves repair precision. In addition, as precharge time moves, the recovery voltage gradually increases, so that the aluminum ions and the oxygen ions may moderately and fully undergo the chemical reaction under the action of the electric field, thereby improving repair efficiency and ensuring repair effect of the bus capacitor.

In a possible design, the charging pile further includes a direct current bus, and each power conversion apparatus includes an alternating current-direct current (alternating current-direct current, AC-DC) module and a direct current-direct current (direct current-direct current, DC-DC) module. An output end of the AC-DC module is connected to an input end of the DC-DC module through the direct current bus. An output end of the DC-DC module is an output end of the power conversion apparatus. The bus capacitor in each power conversion apparatus includes an output capacitor in the AC-DC module and an input capacitor in the DC-DC module. The output end of the precharge circuit is connected to the direct current bus, and the output end of the precharge circuit is connected to the bus capacitor in the power conversion apparatus through the direct current bus.

It may be understood that the power conversion apparatus in this design may be a split-type power conversion apparatus. The AC-DC module and the DC-DC module are independently packaged and are separately connected to the direct current bus. An output capacitor of an AC-DC circuit in the AC-DC module and an input capacitor of a DC-DC circuit in the DC-DC module are bus capacitors.

In a possible design, when duration in which the precharge circuit outputs the recovery voltage is greater than or equal to second preset duration, the precharge circuit is configured to output a first soft-start voltage. The first soft-start voltage is greater than the recovery voltage.

Based on the technical solution of this design, when the duration in which the precharge circuit outputs the recovery voltage exceeds the second preset duration, it indicates that the bus capacitor in the charging pile has been repaired, and the first soft-start voltage that is greater than the recovery voltage is output. This avoids a case in which a voltage change of the bus is excessively large when the AC-DC module is started, an impulse current is formed, and an internal component is damaged.

In a possible design, the charging pile further includes a controller. The controller is configured to: when duration in which the precharge circuit outputs the first soft-start voltage is greater than or equal to third preset duration, control each AC-DC module to start.

Based on the technical solution of this design, when the duration in which the precharge circuit outputs the first soft-start voltage exceeds the third preset duration, the controller may determine that a voltage of the bus capacitor in the charging pile is stable at the first soft-start voltage. In this case, there is no risk of an impulse voltage or an impulse current when the AC-DC module is started. Therefore, the controller can control the AC-DC module to start.

In a possible design, the controller is further configured to: when a voltage output by the AC-DC module is greater than or equal to a preset first bus voltage, control each DC-DC module to start. The first bus voltage is greater than the first soft-start voltage.

Based on the technical solution of this design, when the voltage output by the AC-DC module is greater than or equal to the preset first bus voltage, the controller may determine that the voltage output by the AC-DC module can support the DC-DC module in performing voltage conversion to supply power to a load. Therefore, the controller can control the DC-DC module to start.

In a possible design, each power conversion apparatus includes an AC-DC circuit and a DC-DC circuit. An output end of the DC-DC circuit is an output end of the power conversion apparatus. The bus capacitor is connected between an output end of the AC-DC circuit and an input end of the DC-DC circuit.

It may be understood that the power conversion apparatus in this design may be an integrated power conversion apparatus. The AC-DC circuit and the DC-DC circuit are jointly packaged in the power conversion apparatus. The power conversion apparatus is connected in parallel to a direct current bus. A capacitor between the output end of the AC-DC circuit and the input end of the DC-DC circuit is a bus capacitor.

In a possible design, when duration in which the precharge circuit outputs the recovery voltage is greater than or equal to fourth preset duration, the precharge circuit is configured to output a second soft-start voltage. The second soft-start voltage is greater than the recovery voltage.

Based on the technical solution of this design, when the duration in which the precharge circuit outputs the recovery voltage exceeds the fourth preset duration, it indicates that the bus capacitor in the charging pile has been repaired, and the second soft-start voltage that is greater than the recovery voltage is output. This avoids a case in which a voltage change of the bus is excessively large when the AC-DC circuit operates, an impulse current is formed, and an internal component is damaged.

In a possible design, the charging pile further includes a controller. The controller is configured to: when duration in which the precharge circuit outputs the second soft-start voltage is greater than or equal to fifth preset duration, control each AC-DC circuit to operate.

Based on the technical solution of this design, when the duration in which the precharge circuit outputs the second soft-start voltage exceeds the fifth preset duration, the controller may determine that a voltage of the bus capacitor in the charging pile is stable at the second soft-start voltage. In this case, there is no risk of an impulse voltage or an impulse current when the AC-DC circuit is in an operating state. Therefore, the controller can control the AC-DC circuit to operate.

In a possible design, the controller is further configured to: when a voltage output by the AC-DC circuit is equal to a preset second bus voltage, control each DC-DC circuit to operate. The second bus voltage is greater than the second soft-start voltage.

Based on the technical solution of this design, when the voltage output by the AC-DC circuit is equal to the preset second bus voltage, the controller may determine that the voltage output by the AC-DC circuit can support the DC-DC circuit in performing voltage conversion to supply power to a load. Therefore, the controller can control the DC-DC circuit to operate.

### BRIEF DESCRIPTION OF DRAWINGS

FIG. 1 is a diagram of a structure of a charging pile according to an embodiment of this application;
FIG. 2a is a diagram of a structure of a single-transistor flyback circuit according to an embodiment of this application;
FIG. 2b is a diagram of a structure of a dual-transistor forward circuit according to an embodiment of this application;
FIG. 3a is a diagram of a structure of still another charging pile according to an embodiment of this application;
FIG. 3b is a diagram of a structure of a charging pile according to an embodiment of this application;
FIG. 4 is a diagram of a structure of a power conversion apparatus according to an embodiment of this application;
FIG. 5 is a schematic flowchart of an electrolytic capacitor repair method according to an embodiment of this application;
FIG. 6a is a schematic flowchart of an electrolytic capacitor repair method according to an embodiment of this application;
FIG. 6b is a diagram of a control algorithm for voltage deviation correction according to an embodiment of this application;
FIG. 7 is a schematic flowchart of an electrolytic capacitor repair method according to an embodiment of this application;
FIG. 8 is a schematic flowchart of an electrolytic capacitor repair method according to an embodiment of this application;
FIG. 9 is a schematic flowchart of an electrolytic capacitor repair method according to an embodiment of this application;
FIG. 10 is a schematic flowchart of an electrolytic capacitor repair method according to an embodiment of this application;
FIG. 11 is a schematic flowchart of an electrolytic capacitor repair method according to an embodiment of this application;
FIG. 12 is a schematic flowchart of an electrolytic capacitor repair method according to an embodiment of this application; and
FIG. 13A and FIG. 13B are a schematic flowchart of an electrolytic capacitor repair method according to an embodiment of this application.

### DESCRIPTION OF EMBODIMENTS

First, it should be understood that the terms "first", "second", and the like in this specification, claims, and accompanying drawings of this application are used to distinguish between different objects, but are not used to describe a specific sequence. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment, and same or similar parts between embodiments may be mutually referenced.

It should be understood that, in this application, "at least one" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural.

To make the objectives, technical solutions, and advantages of this application clearer, the following clearly and completely describes application scenarios of the technical solutions in embodiments of this application and technical problems to be resolved.

A capacitor is a passive electronic component configured to store electricity and electric energy, and is a commonly used electronic component in a charging pile. The electrolytic capacitor is a type of capacitor. In the electrolytic capacitor, an anode is a metal foil, a electrolyte is an oxide film that is tightly attached to the metal foil of the anode, and a cathode is made of a conductive material, an electrolyte, and another material.

Aluminum is an amphoteric material. Therefore, if the electrolytic capacitor is not powered on for a long time, aluminum ions may undergo a hydration reaction with water, and AL₂(OH)₃ is produced, corroding an AL₂O₃ oxide film and causing a withstand voltage to decrease. If an operating voltage is applied to the electrolytic capacitor in this case, the capacitor may fail due to overvoltage, or a leakage current increases. Consequently, the capacitor internally heats up, or even the insulation layer is burnt. As a result, an action of an explosion-proof valve fails.

Therefore, how to repair the electrolytic capacitor in time is a technical problem that needs to be urgently resolved currently.

Based on the foregoing problem, embodiments of this application provide a charging pile, to resolve a problem in which performance deteriorates because the electrolytic capacitor is not powered on for a long time and is not repaired in a timely manner. It should be noted that an application scenario of this application includes but is not limited to a charging station with a supercharging system. That the electrolytic capacitor is not powered on for a long time may be caused by long-term storage of the electrolytic capacitor, or may be caused by long-term power-off of the remote station or by other reasons. This is not limited in this application.

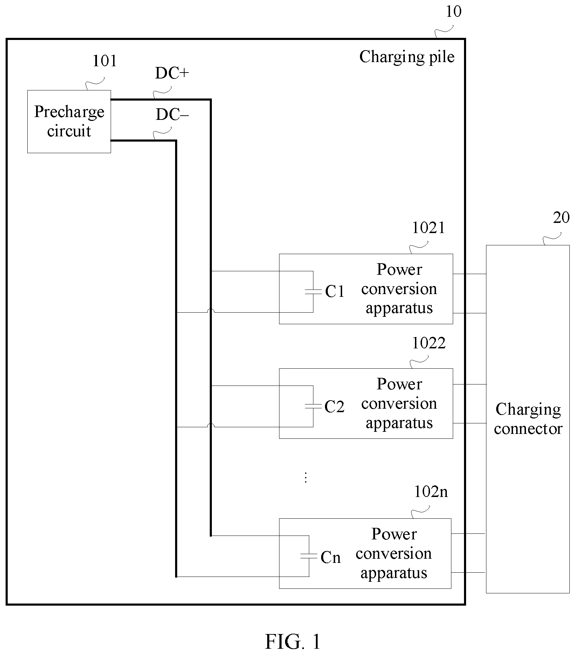

As shown in FIG. 1, the charging pile 10 includes a precharge circuit 101 and at least one power conversion apparatus (a power conversion apparatus 1021 to a power conversion apparatus 102n are shown in the accompanying drawings of this application). An output end of the precharge circuit 101 is connected to a bus capacitor (a bus capacitor C1 to a bus capacitor Cn are shown in the accompanying drawings of this application) in each power conversion apparatus. Each power conversion apparatus is configured to provide electric energy for a charging connector 20.

When each power conversion apparatus is in an off state and maximum power-off duration is greater than first preset duration, the precharge circuit 101 is configured to output a recovery voltage, so that each bus capacitor is powered on.

It should be noted that, a scenario corresponding to that each power conversion apparatus is in the off state may be that the power conversion apparatus is in the off state because the charging pile is idle and is not powered on for a long time, or may be that a user powers off the power conversion apparatus in the pile according to an actual requirement. This is not limited in this application.

It should be further noted that power-off duration is an interval between last power-off time and current power-on time of the bus capacitor. For example, before delivery, a charging module component records "last power-off time" based on "system time" delivered by the equipment, and stores the last power-off time in a board-level storage electrically erasable programmable read-only memory (electrically erasable programmable read-only memory, EEPROM). If the last power-off time, recorded in the memory, of the bus capacitor is January 1, 3023, and on January 31, 3023, the bus capacitor needs to be powered on, the power-off duration is 30 days. The maximum power-off duration is maximum duration in power-off duration of each bus capacitor.

In addition, the recovery voltage output by the precharge circuit 101 is less than a rated voltage of any bus capacitor. For example, if a rated voltage of a smallest bus capacitor in the pile is 450 V, the precharge circuit 101 may output the recovery voltage of 300 V

It may be understood that, if each power conversion apparatus is in the off state, it indicates that the charging pile is unloaded. Therefore, the precharge circuit 101 outputs the recovery voltage but does not output a current, to avoid affecting a load that is connected to the charging pile 10. If the maximum power-off duration is greater than the first preset duration, it indicates that the bus capacitor needs to be repaired in this case, and the precharge circuit 101 needs to output the recovery voltage. Under an action of an electric field, aluminum ions may combine with oxygen ions to re-produce AL₂O₃, thereby repairing the capacitor.

In addition, the recovery voltage output by the precharge circuit 101 is less than the rated voltage of any bus capacitor. In an operating condition in which the electrolytic capacitor is in the off state for a long time, if a greater voltage is suddenly applied, a leakage current increases rapidly. In addition, the leakage current remains at a high level within a period of time, the AL₂O₃ oxide film is generated at a slow speed and cannot be completely repaired, and the capacitor heats up and is damaged. Therefore, the precharge circuit 101 needs to output a small recovery voltage to repair the capacitor.

For example, the first preset duration is three months. When each power conversion apparatus is in the off state and the maximum power-off duration is greater than the first preset duration, the precharge circuit 101 is configured to output the recovery voltage of 300 V, to perform power-on repair on each bus capacitor in the pile. Under the action of the electric field, the aluminum ions combine with the oxygen ions in the bus capacitor to produce AL₂O₃, thereby repairing the capacitor.

Based on the technical solution in this embodiment, the off state of the power conversion apparatus and power-off duration of an electrolytic capacitor are determined, and the precharge circuit 101 may output the recovery voltage to the bus capacitor in each power conversion apparatus, to perform unified power-on repairing on the bus capacitor. The repair process is moderate, and there is no risk of a bias voltage or capacitor damage due to overvoltage.

The following describes the charging pile 10 in detail with reference to an embodiment.

In a possible embodiment, the precharge circuit 101 may be any one of a single-transistor flyback circuit, a dual-transistor forward circuit, a half-bridge converter, and a resonant converter.

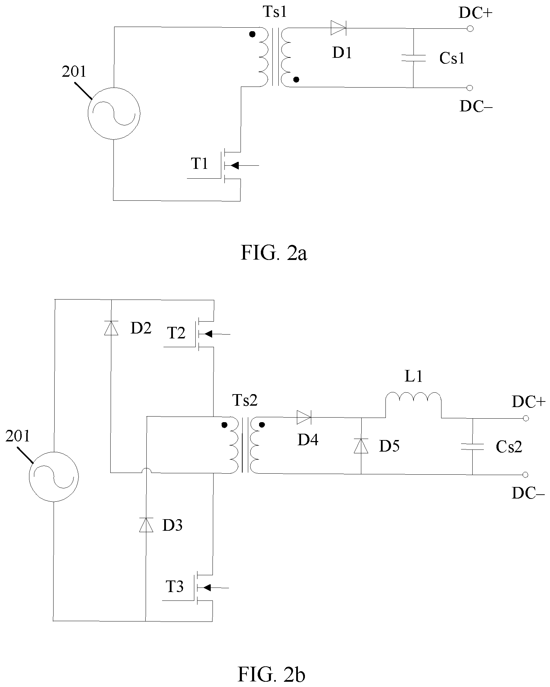

For example, as shown in FIG. 2a, the precharge circuit 101 is the single-transistor flyback circuit that includes a switching transistor T1, a transformer Ts1, a diode D1, and an energy storage capacitor Cs1. A primary side of the transformer Ts1 is connected to an alternating current source 201 and the switching transistor T1. A secondary side of the transformer Ts1 is separately connected to a positive electrode of the diode D1 and a negative electrode of the energy storage capacitor Cs1. A negative electrode of the diode D1 is connected to a positive electrode of the energy storage capacitor Cs1. An output end of the energy storage capacitor Cs1 is connected to a direct current bus.

The single-transistor flyback circuit performs pulse width modulation by controlling a duty cycle of the switching transistor T1, adjusts a magnitude of an output voltage of the circuit, and implements alternating current-direct current conversion. For example, when the switching transistor T1 is turned on, a current flows through the primary side of the transformer Ts1 to generate a magnetic field, the secondary side of the transformer Ts1 generates a current through electromagnetic induction to provide a voltage for the direct current bus, and the energy storage capacitor Cs1 stores energy. When the switching transistor T1 is turned off, magnetic field energy is released and transferred to the secondary side, and a counter electromotive force is generated in the circuit, causing an output voltage of the secondary side of the transformer Ts1 to change. The single-transistor flyback circuit may output a stable direct current voltage by repeatedly controlling the switching transistor T1 to be turned on or off, and the single-transistor flyback circuit may adjust a magnitude of the output direct current voltage by controlling the duty cycle of the switching transistor T1.

For example, as shown in FIG. 2b, the precharge circuit 101 is the dual-transistor forward circuit that includes a switching transistor T2, a switching transistor T3, a transformer Ts2, a diode D2 to a diode D5, an inductor L1, and an energy storage capacitor Cs2. A dotted terminal of the primary side of the transformer Ts1 is connected to a first end of the alternating current source 201 through the switching transistor T2, and a dotted terminal of a primary side of the transformer Ts2 is connected to a negative electrode of the diode D3. An undotted terminal of the primary side of the transformer Ts2 is connected to a second end of the alternating current source 201 through the switching transistor T3, and the undotted terminal of the primary side of the transformer Ts2 is connected to a negative electrode of the diode D2. A positive electrode of the diode D3 is connected to the first end of the alternating current source 201, and a positive electrode of the diode D2 is connected to the second end of the alternating current source 201. A dotted terminal of a secondary side of the transformer Ts2 is connected to a positive electrode of the diode D4, and an undotted terminal of the secondary side of the transformer Ts2 is separately connected to a positive electrode of the diode D5 and one end of the energy storage capacitor Cs2. A negative electrode of the diode D4 is separately connected to the inductor L1 and a negative electrode of the diode D5, and the inductor L1 is connected to the other end of the energy storage capacitor Cs2. An output end of the energy storage capacitor Cs2 is connected to a direct current bus.

The dual-transistor forward circuit performs pulse width modulation by controlling duty cycles of the switching transistor T2 and the switching transistor T3, adjusts a magnitude of an output voltage of the circuit, and implements alternating current-direct current conversion. For example, when the switching transistor T2 and the switching transistor T3 are turned on, a voltage of the alternating current source 201 is applied to a primary inductor of the transformer Ts2. If a voltage of the primary winding is positive up and negative down, a voltage of a secondary winding of the transformer Ts2 is also positive up and negative down. When the switching transistor T2 and the switching transistor T3 are turned off, the voltage of the primary winding is negative up and positive down, the diode D2 and the diode D3 are in an on state, and energy stored in leakage inductance is fed back to the alternating current source 201. In addition, the voltage of the secondary winding is negative up and positive down, and an energy storage inductor L1 converts stored magnetic energy into electric energy, to supply power to the direct current bus.

In a possible embodiment, precharge duration corresponding to the recovery voltage includes at least two precharge time periods. In two adjacent precharge time periods, a reference voltage corresponding to an earlier precharge time period is less than a reference voltage corresponding to a later precharge time period.

For example, the maximum power-off duration of the bus capacitor in the pile is one year. The precharge duration, corresponding to the recovery voltage, which is obtained based on the one-year maximum power-off duration includes a first precharge time period (from a charging start time point at 00:00 to an end time point at 00:15) and a second precharge time period (from a charging start time point at 00:15 to an end time point at 00:40). A reference voltage corresponding to the first precharge time period is 200 V, and a reference voltage corresponding to the second precharge time period is 300 V Therefore, the precharge circuit 101 continuously outputs a recovery voltage of 200 V within the first precharge time period, and continuously outputs a recovery voltage of 300 V within the second precharge time period.

A person skilled in the art should know that an appropriate recovery voltage and repair duration may alternatively be set based on another actual parameter of an electrical device. This is not limited in this application.

Based on the technical solution in this embodiment, the bus capacitor is repaired by time period and by voltage level, so that a chemical reaction in the capacitor can moderately and fully occur, thereby improving repair efficiency.

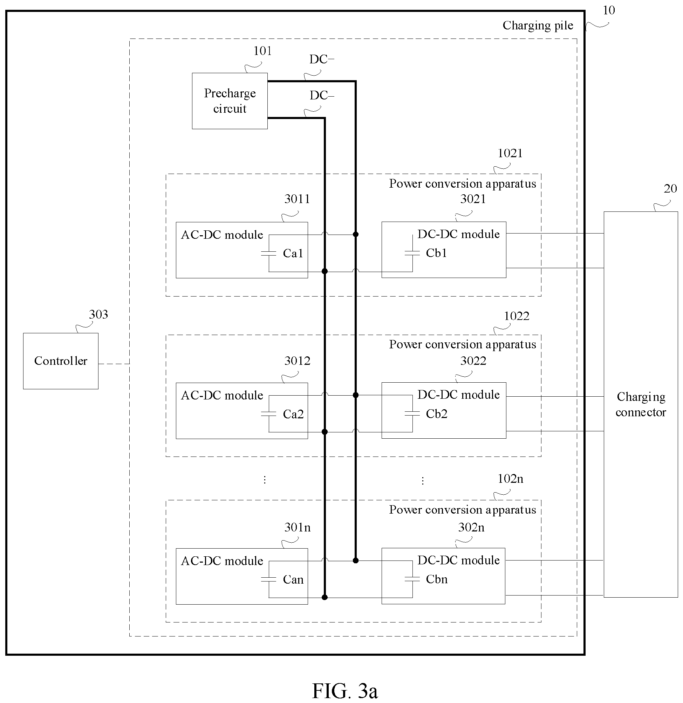

In a possible embodiment, as shown in FIG. 3a, the charging pile 10 further includes a direct current bus (a positive direct current bus DC+ and a negative direct current bus DC- are shown in the accompanying drawings of this application). Each power conversion apparatus includes an AC-DC module (an AC-DC module 3011 to an AC-DC module 301n are shown in FIG. 3a) and a DC-DC module (a DC-DC module 3021 to a DC-DC module 302n are shown in FIG. 3a). An output end of the AC-DC module is connected to an input end of the DC-DC module through the direct current bus. An output end of the DC-DC module is an output end of the power conversion apparatus. The bus capacitor in each power conversion apparatus includes an output capacitor (an output capacitor Ca1 to an output capacitor Can are shown in FIG. 3a) of the AC-DC module and an input capacitor (an output capacitor Cb1 to an output capacitor Cbn are shown in FIG. 3a) of the DC-DC module.

The output end of the precharge circuit 101 is connected to the direct current bus, and the output end of the precharge circuit 101 is connected to the bus capacitor in the power conversion apparatus through the direct current bus.

It may be understood that the power conversion apparatus in this embodiment may be a split-type power conversion apparatus. The AC-DC module and the DC-DC module are independently packaged and are separately connected in parallel to the direct current bus. An output capacitor of an AC-DC circuit in the AC-DC module and an input capacitor of a DC-DC circuit in the DC-DC module are bus capacitors.

In a possible embodiment, when duration in which the precharge circuit 101 outputs the recovery voltage is greater than or equal to second preset duration, the precharge circuit 101 is configured to output a first soft-start voltage.

It should be noted that the first soft-start voltage is greater than the recovery voltage. It may be understood that the precharge circuit 101 outputs the first soft-start voltage that is greater than the recovery voltage. In a subsequent process, this can avoid a problem in which a voltage change of the bus is excessively large when the AC-DC module is started, an impulse current is formed, and an internal component is damaged.

For example, the second preset duration is 15 minutes, the recovery voltage is 300 V, and the first soft-start voltage is 700 V When the duration in which the precharge circuit 101 outputs the recovery voltage of 300 V exceeds 15 minutes, the precharge circuit 101 outputs the first soft-start voltage of 700 V, to raise the voltage of the bus capacitor to 700 V

Based on the technical solution in this embodiment, when the duration in which the precharge circuit 101 outputs the recovery voltage exceeds the second preset duration, it indicates that the bus capacitor in the charging pile 10 has been repaired. Therefore, the precharge circuit 101 outputs the first soft-start voltage that is greater than the recovery voltage. This can avoid forming an impulse current and damaging an internal component.

In a possible embodiment, as shown in FIG. 3a, the charging pile 10 further includes a controller 303. The controller 303 is configured to: when duration in which the precharge circuit 101 outputs the first soft-start voltage is greater than or equal to third preset duration, control each AC-DC module to start.

It should be noted that the AC-DC module may share a same alternating current input source with the precharge circuit 101, or may be separately connected to a different alternating current input source from the precharge circuit 101. This is not limited in this application.

In addition, when the controller 303 controls each AC-DC module to start, the controller 303 can further control the precharge circuit 101 to stop operating, or can control the precharge circuit 101 to continue to be in an operating state. This is not limited in this application.

For example, the third preset duration is 5s, and the first soft-start voltage is 700 V When the duration in which the precharge circuit 101 outputs the first soft-start voltage of 700 V exceeds 5s, the controller 303 controls each AC-DC module to start, so that the AC-DC module performs alternating current-direct current conversion on an input alternating current voltage, and outputs a direct current voltage of 800 V

Based on the technical solution in this embodiment, when the duration in which the precharge circuit 101 outputs the first soft-start voltage exceeds the third preset duration, the controller 303 may determine that a voltage of the bus capacitor in the charging pile 10 is stable at the first soft-start voltage. In this case, there is no risk of an impulse voltage or an impulse current when the AC-DC module is started. Therefore, the controller can control the AC-DC module to start.

In a possible embodiment, as shown in FIG. 3a, the controller 303 is further configured to: when a voltage output by the AC-DC module is greater than or equal to a preset first bus voltage, control the DC-DC module to start.

It should be noted that the first bus voltage is greater than the first soft-start voltage.

For example, the first soft-start voltage is 700 V, and the preset first bus voltage is 820 V When the voltage output by the AC-DC module is equal to 820 V, the controller 303 controls each DC-DC module to start, so that the DC-DC module converts an input voltage of 820 V into a voltage required by the load.

Based on the technical solution in this embodiment of this application, when the voltage output by the AC-DC module is greater than or equal to the preset first bus voltage, the controller 303 may determine that the voltage output by the AC-DC module can support the DC-DC module in performing voltage conversion to meet a requirement of supplying power to the load. Therefore, the controller 303 can control the DC-DC module to start.

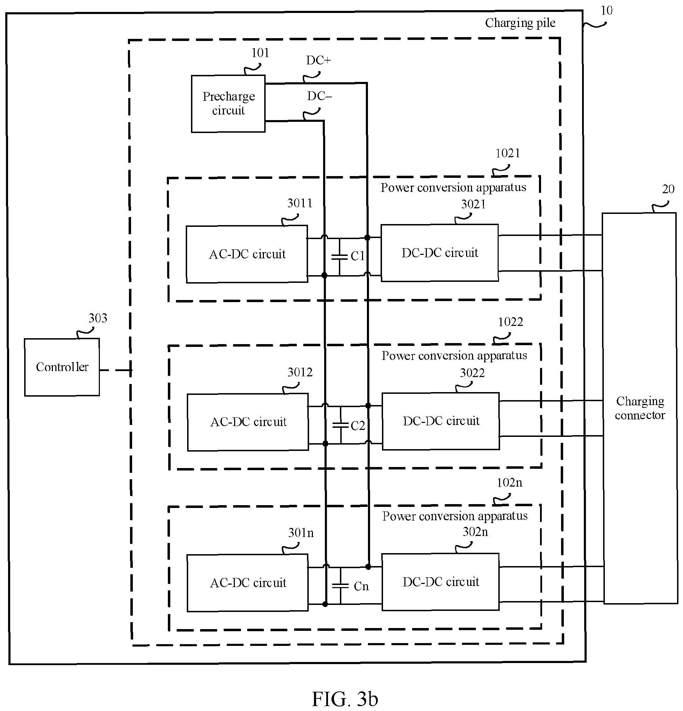

In a possible embodiment, as shown in FIG. 3b, each power conversion apparatus includes an AC-DC circuit (an AC-DC circuit 3011 to an AC-DC circuit 301n are shown in FIG. 3b) and a DC-DC circuit (a DC-DC circuit 3021 to a DC-DC circuit 302n are shown in FIG. 3b). An output end of the DC-DC circuit is an output end of the power conversion apparatus.

The bus capacitor is connected between an output end of the AC-DC circuit and an input end of the DC-DC circuit.

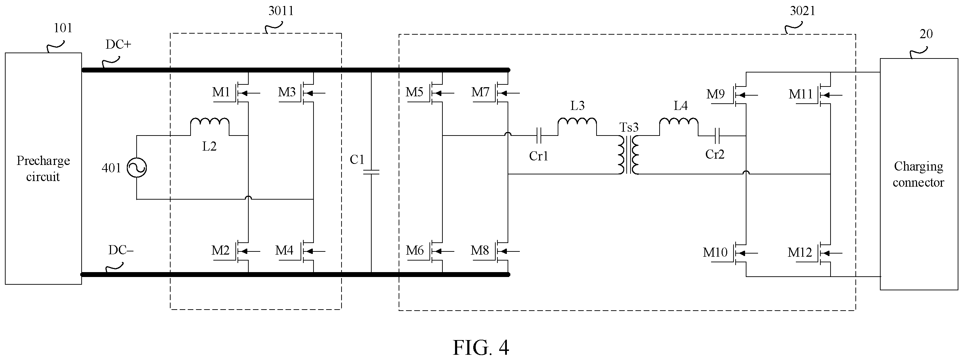

For example, descriptions are provided by using the following example: In the power conversion apparatus 1021 shown in FIG. 3b, the AC-DC circuit 3011 is a power factor correction (power factor correction, PFC) circuit, and the DC-DC circuit 3021 is a bidirectional full-bridge resonant circuit. As shown in FIG. 4, the PFC circuit includes switching transistors M1 to M12, inductors L2 to L4, a bus capacitor C1, a capacitor Cr1, a capacitor Cr2, and a transformer Ts3.

The switching transistor M1 and the switching transistor M2 are connected in series to form a first bridge arm. The switching transistor M3 and the switching transistor M4 are connected in series to form a second bridge arm. The switching transistor M5 and the switching transistor M6 are connected in series to form a third bridge arm. The switching transistor M7 and the switching transistor M8 are connected in series to form a fourth bridge arm. The switching transistor M9 and the switching transistor M10 are connected in series to form a fifth bridge arm. The switching transistor M11 and the switching transistor M12 are connected in series to form a sixth bridge arm.

The inductor L2 is connected between a first end of an input source 401 and a bridge arm midpoint of the first bridge arm. A second end of the input source 401 is connected to a bridge arm midpoint of the second bridge arm. The bus capacitor C1, the first bridge arm, the second bridge arm, the third bridge arm, and the fourth bridge arm are connected in parallel. A bridge arm midpoint of the third bridge arm is connected to a first end of a primary winding of the transformer Ts3 through the capacitor Cr1 and the inductor L3 that are connected in series. A bridge arm midpoint of the fourth bridge arm is connected to a second end of the primary winding of the transformer Ts3. A bridge arm midpoint of the fifth bridge arm is connected to a first end of a secondary winding of the transformer Ts3 through the capacitor Cr2 and the inductor L4 that are connected in series. A bridge arm midpoint of the sixth bridge arm is connected to a second end of the secondary winding of the transformer Ts3. An output end of the sixth bridge arm is connected to the charging connector.

In the PFC circuit, the switching transistor M1 and the switching transistor M4 operate synchronously, the switching transistor M2 and the switching transistor M3 operate synchronously, and the switching transistor M1 and the switching transistor M3 operate in a mutually exclusive manner. The controller 303 controls conduction and cutoff of the switching transistors in the first bridge arm and the second bridge arm, to perform alternating current-direct current conversion on an input alternating current voltage and output a direct current voltage.

The bidirectional full-bridge resonant circuit, by controlling conduction and cutoff of the switching transistors, performs direct current conversion on an input voltage that passes through a full-bridge circuit that is formed by the third bridge arm and the fourth bridge arm and a full-bridge circuit that is formed by the fifth bridge arm and the sixth bridge arm, so that the bidirectional full-bridge resonant circuit can transfer energy in different power directions to provide electric energy for the charging connector.

In a possible embodiment, when duration in which the precharge circuit 101 outputs the recovery voltage is greater than or equal to fourth preset duration, the precharge circuit 101 is configured to output a second soft-start voltage.

It should be noted that the second soft-start voltage is greater than the recovery voltage. It may be understood that the precharge circuit 101 outputs the second soft-start voltage that is greater than the recovery voltage. In a subsequent process, this can avoid a problem in which a voltage change of the bus is excessively large when the AC-DC circuit enters an operating state, an impulse current is formed, and an internal component is damaged.

For example, the fourth preset duration is 15 minutes, the recovery voltage is 300 V, and the second soft-start voltage is 700 V When the duration in which the precharge circuit 101 outputs the recovery voltage of 300 V exceeds 15 minutes, the precharge circuit 101 outputs the second soft-start voltage of 700 V, to raise the voltage of the bus capacitor to 700 V

Based on the technical solution in this embodiment, when the duration in which the precharge circuit 101 outputs the recovery voltage exceeds the fourth preset duration, it indicates that the bus capacitor in the charging pile 10 has been repaired. Therefore, the precharge circuit 101 outputs the second soft-start voltage that is greater than the recovery voltage. This can avoid forming an impulse current and damaging an internal component.

In a possible embodiment, the charging pile 10 further includes a controller. As shown in FIG. 3b, the controller 303 is configured to: when duration in which the precharge circuit 101 outputs the second soft-start voltage is greater than or equal to fifth preset duration, control the AC-DC circuit to operate.

It should be noted that the AC-DC circuit may share a same alternating current input source with the precharge circuit 101, or may be separately connected to a different alternating current input source from the precharge circuit 101. This is not limited in this application.

In addition, when the controller 303 controls each AC-DC circuit to operate, the controller 303 can further control the precharge circuit 101 to stop operating, or can control the precharge circuit 101 to continue to be in an operating state. This is not limited in this application.

For example, the fifth preset duration is 5s, and the second soft-start voltage is 700 V When the duration in which the precharge circuit 101 outputs the second soft-start voltage of 700 V exceeds 5s, the controller 303 controls each AC-DC circuit to operate, so that the AC-DC circuit performs alternating current-direct current conversion on an input alternating current voltage, and outputs a direct current voltage of 800 V

Based on the technical solution in this embodiment, when the duration in which the precharge circuit 101 outputs the second soft-start voltage exceeds the fifth preset duration, the controller 303 may determine that a voltage of the bus capacitor in the charging pile 10 is stable at the second soft-start voltage. In this case, there is no risk of an impulse voltage or an impulse current when the AC-DC circuit is started. Therefore, the controller can control the AC-DC circuit to operate.

In a possible embodiment, the controller 303 is further configured to: when a voltage output by the AC-DC circuit is equal to a preset second bus voltage, control the DC-DC circuit to operate.

It should be noted that the second bus voltage is greater than the second soft-start voltage.

For example, the second soft-start voltage is 700 V, and the preset second bus voltage is 820 V When the voltage output by the AC-DC circuit is equal to 820 V, the controller 303 controls each DC-DC circuit to operate, so that the DC-DC circuit converts the input 820 V into a voltage required by the load.

Based on the technical solution in this embodiment of this application, when the voltage output by the AC-DC circuit is greater than or equal to the preset second bus voltage, the controller 303 may determine that the voltage output by the AC-DC circuit can support the DC-DC circuit in performing voltage conversion to meet a requirement of supplying power to the load. Therefore, the controller 303 can control the DC-DC circuit to operate.

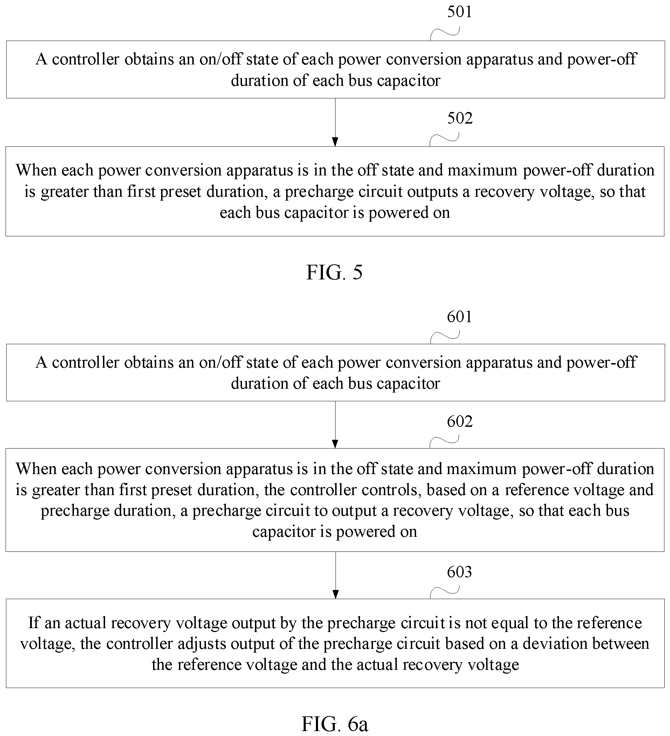

Based on a same technical concept, an embodiment of this application further provides an electrolytic capacitor repair method. For implementation of the method, refer to the implementation of the foregoing charging pile. The electrolytic capacitor repair method in this embodiment of this application is applied to the charging pile shown in FIG. 1. As shown in FIG. 5, the method includes the following steps.

Step 501: A controller obtains an on/off state of each power conversion apparatus and power-off duration of each bus capacitor.

It should be noted that the controller is not shown in FIG. 1. The controller in this application may be a host control module in a charging pile, or may be a controller that independently controls operating of a precharge circuit.

Step 502: When each power conversion apparatus is in the off state and maximum power-off duration is greater than first preset duration, a precharge circuit outputs a recovery voltage, so that each bus capacitor is powered on.

It should be noted that the power-off duration is an interval between last power-off time and current power-on time of the bus capacitor, the maximum power-off duration is maximum duration in the power-off duration of each bus capacitor, and the recovery voltage is less than a rated voltage of any bus capacitor.

For example, a capacitor repair function enabling switch is disposed in the host control module. After the switch is enabled, the host control module synchronizes system time, updates the power-on and power-off time interval of the capacitor, and determines a status of the bus capacitor based on the power-off duration of each bus capacitor. When the switch is disabled, each charging module in a system normally responds to a power-on instruction of the host control module.

In addition, the host control module not only needs to determine, based on the power-off duration, whether there is a bus capacitor that needs to be repaired in the pile, but also needs to ensure, based on the on/off state of the power conversion apparatus, that the power conversion apparatus is unloaded, thereby avoiding affecting the load in a manner of charging and repairing the bus capacitor by using the precharge circuit. For example, if each power conversion apparatus is originally in the off state, when determining that the bus capacitor needs to be repaired, the host control module may directly control the precharge circuit to perform charging repair. If the power conversion apparatus is originally in the on state, when determining that the bus capacitor needs to be repaired, the host control module can control the power conversion apparatus to be in the off state, and then control the precharge circuit to perform charging repair.

In a possible embodiment, as shown in FIG. 6a, the method includes the following steps.

Step 601: A controller obtains an on/off state of each power conversion apparatus and power-off duration of each bus capacitor.

Step 602: When each power conversion apparatus is in the off state and maximum power-off duration is greater than first preset duration, the controller controls, based on a reference voltage and precharge duration, a precharge circuit to output a recovery voltage, so that each bus capacitor is powered on.

It should be noted that the precharge duration corresponding to the recovery voltage includes at least two precharge time periods. In two adjacent precharge time periods, a reference voltage corresponding to an earlier precharge time period is less than a reference voltage corresponding to a later precharge time period.

For example, the reference voltage and the precharge duration may be determined based on the maximum power-off duration.

If the maximum power-off duration is less than 0.5 year, the bus capacitor in a charging pile does not need to be repaired; if the maximum power-off duration is greater than or equal to 0.5 year and less than one year, a corresponding first precharge time period is 10 minutes, a reference voltage within the first precharge time period is 200 V, a second precharge time period is 5 minutes, and a reference voltage within the second precharge time period is 300 V; or if the maximum power-off duration is greater than or equal to one year, a corresponding first precharge time period is 15 minutes, a reference voltage within the first precharge time period is 300 V, a second precharge time period is 10 minutes, and a reference voltage within the second precharge time period is 400 V

Step 603: If an actual recovery voltage output by the precharge circuit is not equal to the reference voltage, the controller adjusts output of the precharge circuit based on a deviation between the reference voltage and the actual recovery voltage.

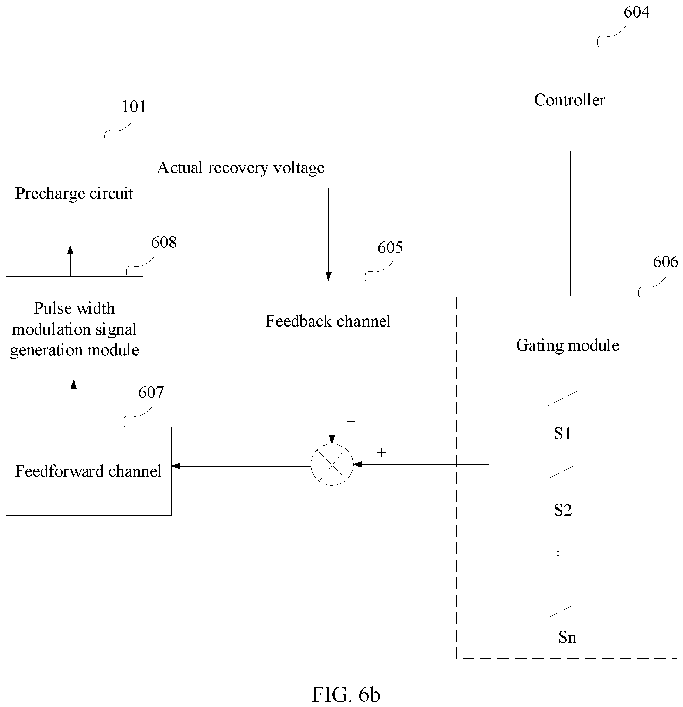

For example, in a diagram of an algorithm shown in FIG. 6b, a controller 604 controls, based on the maximum power-off duration, a corresponding switch (shown as a switch S1 to a switch Sn in FIG. 6b) in a gating module 606 to output a reference voltage. The actual recovery voltage output by the precharge circuit 101 is substituted into a transfer function H(s) of a feedback channel 605. An output result of the feedback channel 605 is subtracted from the reference voltage output by the gating module 606, and a difference result is input to a feedforward channel 607. A pulse width modulation signal generation module 608 generates a pulse width modulation signal based on an output result of the feedforward channel 607, and outputs the pulse width modulation signal to the precharge circuit 101, to adjust an output voltage of the precharge circuit 101.

Based on the technical solution in this embodiment, the controller may aggregate power-on and power-off time intervals of all bus capacitors and use the largest interval to obtain the maximum power-off duration, determines repair duration and a recovery voltage based on the maximum power-off duration, and divides a repair process into multiple segments to implement hierarchical repair. In this way, a chemical reaction in the capacitor moderately and fully occurs, thereby improving repair efficiency.

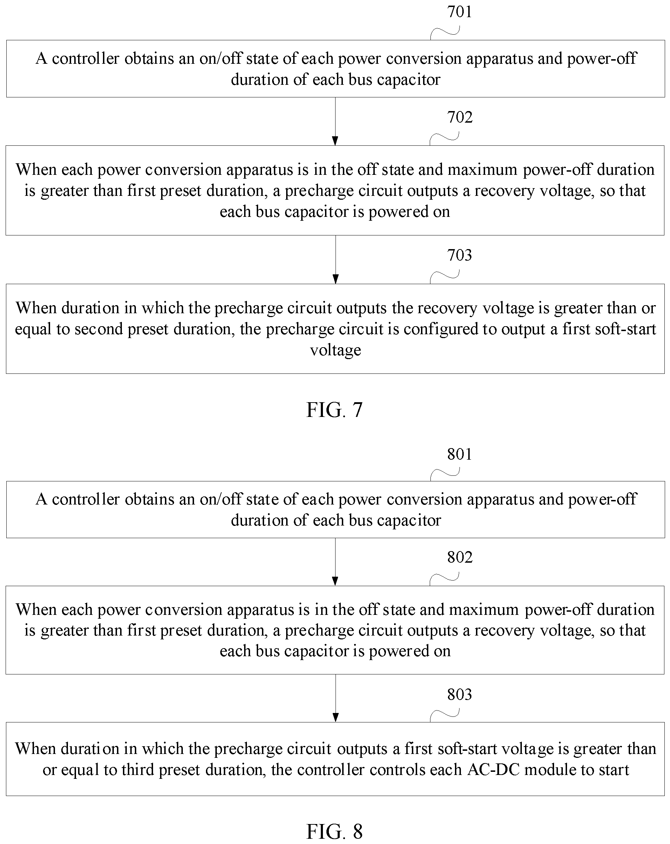

In a possible embodiment, the electrolytic capacitor repair method provided in this application is applied to the split-type power conversion apparatus shown in FIG. 3a. As shown in FIG. 7, the method includes the following steps.

Step 701: A controller obtains an on/off state of each power conversion apparatus and power-off duration of each bus capacitor.

Step 702: When each power conversion apparatus is in the off state and maximum power-off duration is greater than first preset duration, a precharge circuit outputs a recovery voltage, so that each bus capacitor is powered on.

Step 703: When duration in which the precharge circuit outputs the recovery voltage is greater than or equal to second preset duration, the precharge circuit is configured to output a first soft-start voltage.

It should be noted that the first soft-start voltage is greater than the recovery voltage.

It may be understood that when the duration in which the precharge circuit outputs the recovery voltage exceeds the second preset duration, it indicates that the bus capacitor in a charging pile has been repaired, and the precharge circuit outputs the first soft-start voltage that is greater than the recovery voltage. This avoids a case in which a voltage change of the bus is excessively large when the AC-DC module is started, an impulse current is formed, and an internal component is damaged.

In addition, after capacitor repair is completed in step 702, a load test may be performed for insurance purposes. Step 703 is performed after the test is passed.

In a possible embodiment, the electrolytic capacitor repair method provided in this application is applied to the split-type power conversion apparatus shown in FIG. 3a. As shown in FIG. 8, the method includes the following steps.

Step 801: A controller obtains an on/off state of each power conversion apparatus and power-off duration of each bus capacitor.

Step 802: When each power conversion apparatus is in the off state and maximum power-off duration is greater than first preset duration, a precharge circuit outputs a recovery voltage, so that each bus capacitor is powered on.

Step 803: When duration in which the precharge circuit outputs a first soft-start voltage is greater than or equal to third preset duration, the controller controls each AC-DC module to start.

It may be understood that when the duration in which the precharge circuit outputs the first soft-start voltage exceeds the third preset duration, the controller may determine that a voltage of the bus capacitor in a charging pile is stable at the first soft-start voltage. In this case, there is no risk of an impulse voltage or an impulse current when the AC-DC module is started. Therefore, the controller can control the AC-DC module to start.

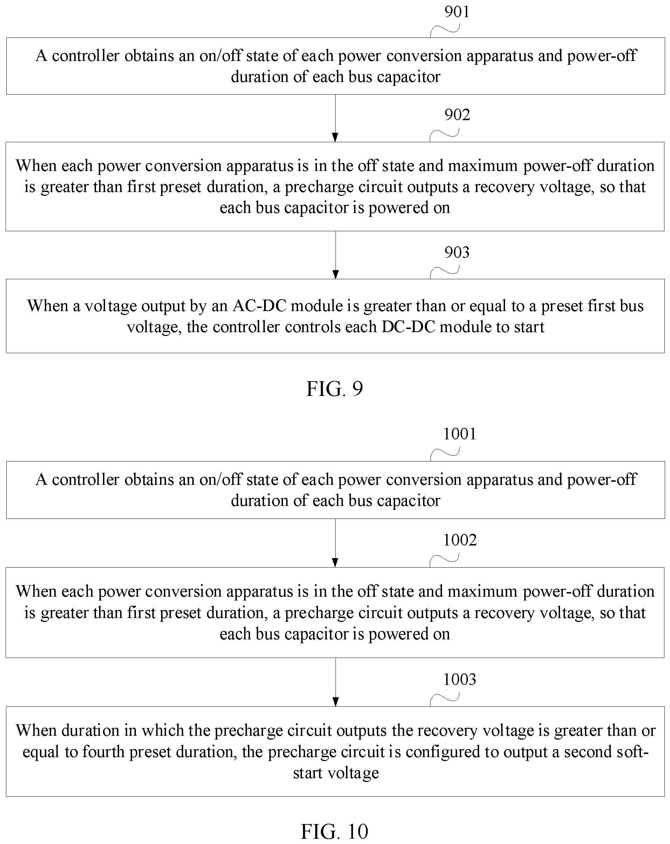

In a possible embodiment, the electrolytic capacitor repair method provided in this application is applied to the split-type power conversion apparatus shown in FIG. 3a. As shown in FIG. 9, the method includes the following steps.

Step 901: A controller obtains an on/off state of each power conversion apparatus and power-off duration of each bus capacitor.

Step 902: When each power conversion apparatus is in the off state and maximum power-off duration is greater than first preset duration, a precharge circuit outputs a recovery voltage, so that each bus capacitor is powered on.

Step 903: When a voltage output by an AC-DC module is greater than or equal to a preset first bus voltage, the controller controls each DC-DC module to start.

It should be noted that the first bus voltage is greater than the first soft-start voltage.

It may be understood that when the voltage output by the AC-DC module is greater than or equal to the preset first bus voltage, the controller may determine that the voltage output by the AC-DC module can support the DC-DC module in performing voltage conversion to supply power to a load. Therefore, the controller can control the DC-DC module to start.

In a possible embodiment, the electrolytic capacitor repair method provided in this application is applied to the integrated power conversion apparatus shown in FIG. 3b. As shown in FIG. 10, the method includes the following steps.

Step 1001: A controller obtains an on/off state of each power conversion apparatus and power-off duration of each bus capacitor.

Step 1002: When each power conversion apparatus is in the off state and maximum power-off duration is greater than first preset duration, a precharge circuit outputs a recovery voltage, so that each bus capacitor is powered on.

Step 1003: When duration in which the precharge circuit outputs the recovery voltage is greater than or equal to fourth preset duration, the precharge circuit is configured to output a second soft-start voltage.

It should be noted that the second soft-start voltage is greater than the recovery voltage.

It may be understood that when the duration in which the precharge circuit outputs the recovery voltage exceeds the fourth preset duration, it indicates that the bus capacitor in a charging pile has been repaired, and the second soft-start voltage that is greater than the recovery voltage is output. This avoids a case in which a voltage change of the bus is excessively large when the AC-DC circuit operates, an impulse current is formed, and an internal component is damaged.

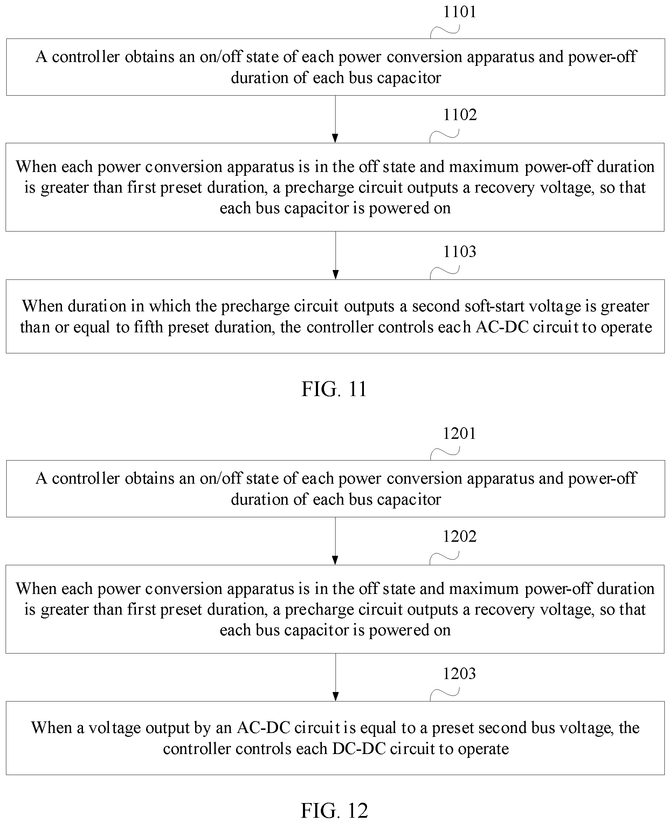

In a possible embodiment, the electrolytic capacitor repair method provided in this application is applied to the integrated power conversion apparatus shown in FIG. 3b. As shown in FIG. 11, the method includes the following steps.

Step 1101: A controller obtains an on/off state of each power conversion apparatus and power-off duration of each bus capacitor.

Step 1102: When each power conversion apparatus is in the off state and maximum power-off duration is greater than first preset duration, a precharge circuit outputs a recovery voltage, so that each bus capacitor is powered on.

Step 1103: When duration in which the precharge circuit outputs a second soft-start voltage is greater than or equal to fifth preset duration, the controller controls each AC-DC circuit to operate.

It may be understood that when the duration in which the precharge circuit outputs the second soft-start voltage exceeds the fifth preset duration, the controller may determine that a voltage of the bus capacitor in a charging pile is stable at the second soft-start voltage. In this case, there is no risk of an impulse voltage or an impulse current when the AC-DC circuit is in an operating state. Therefore, the controller can control the AC-DC circuit to operate.

In a possible embodiment, the electrolytic capacitor repair method provided in this application is applied to the integrated power conversion apparatus shown in FIG. 3b. As shown in FIG. 12, the method includes the following steps.

Step 1201: A controller obtains an on/off state of each power conversion apparatus and power-off duration of each bus capacitor.

Step 1202: When each power conversion apparatus is in the off state and maximum power-off duration is greater than first preset duration, a precharge circuit outputs a recovery voltage, so that each bus capacitor is powered on.

Step 1203: When a voltage output by an AC-DC circuit is equal to a preset second bus voltage, the controller controls each DC-DC circuit to operate.

It should be noted that the second bus voltage is greater than the second soft-start voltage.

It may be understood that when the voltage output by the AC-DC circuit is equal to the preset second bus voltage, the controller may determine that the voltage output by the AC-DC circuit can support the DC-DC circuit in performing voltage conversion to supply power to a load. Therefore, the controller can control the DC-DC circuit to operate.

The following describes a possible design solution to the electrolytic capacitor repair method with reference to the foregoing embodiments.

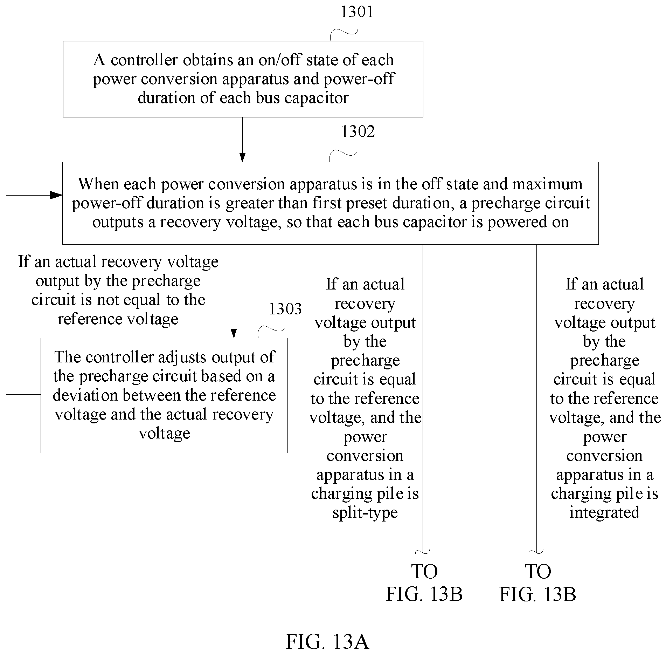

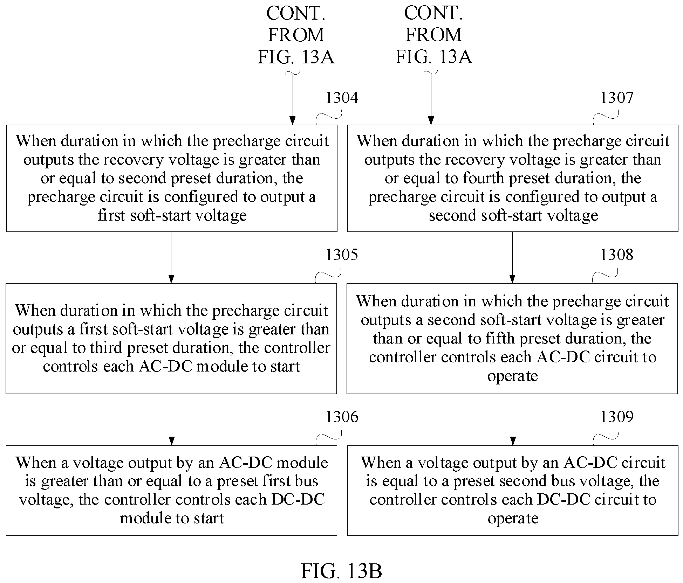

In a possible design, as shown in FIG. 13A and FIG. 13B, the method includes the following steps.

Step 1301: A controller obtains an on/off state of each power conversion apparatus and power-off duration of each bus capacitor.

Step 1302: When each power conversion apparatus is in the off state and maximum power-off duration is greater than first preset duration, the controller controls, based on a reference voltage and precharge duration, a precharge circuit to output a recovery voltage, so that each bus capacitor is powered on. If an actual recovery voltage output by the precharge circuit is not equal to the reference voltage, step 1303 is performed. If an actual recovery voltage output by the precharge circuit is equal to the reference voltage, and the power conversion apparatus in a charging pile is split-type, step 1304 is performed. If an actual recovery voltage output by the precharge circuit is equal to the reference voltage, and the power conversion apparatus in a charging pile is integrated, step 1307 is performed.

Step 1303: The controller adjusts output of the precharge circuit based on a deviation between the reference voltage and the actual recovery voltage. In this case, step 1302 is performed.

Step 1304: When duration in which the precharge circuit outputs the recovery voltage is greater than or equal to second preset duration, the precharge circuit is configured to output a first soft-start voltage.

Step 1305: When duration in which the precharge circuit outputs a first soft-start voltage is greater than or equal to third preset duration, the controller controls each AC-DC module to start.

Step 1306: When a voltage output by an AC-DC module is greater than or equal to a preset first bus voltage, the controller controls each DC-DC module to start.

Step 1307: When duration in which the precharge circuit outputs the recovery voltage is greater than or equal to fourth preset duration, the precharge circuit is configured to output a second soft-start voltage.

Step 1308: When duration in which the precharge circuit outputs a second soft-start voltage is greater than or equal to fifth preset duration, the controller controls each AC-DC circuit to operate.

Step 1309: When a voltage output by an AC-DC circuit is equal to a preset second bus voltage, the controller controls each DC-DC circuit to operate.

In conclusion, this application provides a charging pile and electrolytic capacitor repair methods, to resolve a problem in which performance deteriorates because the electrolytic capacitor is not powered on for a long time and is not repaired in a timely manner. In this application, when the power conversion apparatus is in an off state and power-off duration of the bus capacitor is excessively long, the charging pile performs low-voltage charging repair by using a precharge circuit. After the repair is completed, the precharge circuit outputs a soft-start voltage that is greater than a recovery voltage, to avoid a case in which a voltage change of the bus capacitor is excessively large, an impulse current is formed, and an internal component is damaged. Further, when a bus voltage reaches a preset bus voltage, the power conversion apparatus outputs electric energy to supply power to a load.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. A charging pile, wherein the charging pile comprises a precharge circuit and at least one power conversion apparatus, an output end of the precharge circuit is connected to a bus capacitor in each power conversion apparatus, and each power conversion apparatus is configured to provide electric energy for a charging connector;
when each power conversion apparatus is in an off state and maximum power-off duration is greater than first preset duration, the precharge circuit is configured to output a recovery voltage, so that each bus capacitor is powered on; and
a power-off duration is an interval between last power-off time and current power-on time of the bus capacitor, the maximum power-off duration is maximum duration in the power-off duration of each bus capacitor, and the recovery voltage is less than a rated voltage of any bus capacitor.

2. The charging pile according to claim 1, wherein precharge duration corresponding to the recovery voltage comprises at least two precharge time periods, and in two adjacent precharge time periods, a reference voltage corresponding to an earlier precharge time period is less than a reference voltage corresponding to a later precharge time period.

3. The charging pile according to claim 1 or 2, wherein the charging pile further comprises a direct current bus, each power conversion apparatus comprises an AC-DC module and a DC-DC module, an output end of the AC-DC module is connected to an input end of the DC-DC module through the direct current bus, an output end of the DC-DC module is an output end of the power conversion apparatus, and the bus capacitor in each power conversion apparatus comprises an output capacitor of the AC-DC module and an input capacitor of the DC-DC module; and
the output end of the precharge circuit is connected to the direct current bus, and the output end of the precharge circuit is connected to the bus capacitor in the power conversion apparatus through the direct current bus.

4. The charging pile according to claim 3, wherein when duration in which the precharge circuit outputs the recovery voltage is greater than or equal to second preset duration, the precharge circuit is configured to output a first soft-start voltage, and the first soft-start voltage is greater than the recovery voltage.

5. The charging pile according to claim 4, wherein the charging pile further comprises a controller, and the controller is configured to:
when duration in which the precharge circuit outputs the first soft-start voltage is greater than or equal to third preset duration, control each AC-DC module to start.

6. The charging pile according to claim 5, wherein the controller is further configured to:
when a voltage output by the AC-DC module is greater than or equal to a preset first bus voltage, control each DC-DC module to start, wherein the first bus voltage is greater than the first soft-start voltage.

7. The charging pile according to claim 1 or 2, wherein each power conversion apparatus comprises an AC-DC circuit and a DC-DC circuit, and an output end of the DC-DC circuit is an output end of the power conversion apparatus; and
the bus capacitor is connected between an output end of the AC-DC circuit and an input end of the DC-DC circuit.

8. The charging pile according to claim 7, wherein when duration in which the precharge circuit outputs the recovery voltage is greater than or equal to fourth preset duration, the precharge circuit is configured to output a second soft-start voltage, and the second soft-start voltage is greater than the recovery voltage.

9. The charging pile according to claim 8, wherein the charging pile further comprises a controller, and the controller is configured to:
when duration in which the precharge circuit outputs the second soft-start voltage is greater than or equal to fifth preset duration, control each AC-DC circuit to operate.

10. The charging pile according to claim 9, wherein the controller is further configured to:
when a voltage output by the AC-DC circuit is equal to a preset second bus voltage, control each DC-DC circuit to operate, wherein the second bus voltage is greater than the second soft-start voltage.
